**Europäisches Patentamt**

**European Patent Office**

**Office européen des brevets**

(19)

(11) Publication number : **0 338 724 B1**

# (12) EUROPEAN PATENT SPECIFICATION

(45) Date of publication of patent specification :
**10.02.93 Bulletin 93/06**

(51) Int. Cl.⁵ : **C09J 133/08,** C08F 220/18,
C09J 7/02, C08G 18/62

(21) Application number : **89303655.8**

(22) Date of filing : **13.04.89**

(54) **Pressure-sensitive adhesive.**

(30) Priority : **19.04.88 JP 96656/88**

(43) Date of publication of application :
**25.10.89 Bulletin 89/43**

(45) Publication of the grant of the patent :
**10.02.93 Bulletin 93/06**

(84) Designated Contracting States :
**BE DE ES FR GB IT SE**

(56) References cited :
**CHEMICAL ABSTRACTS, vol. 105, no. 4, 28th
July 1986, page 55, abstract no. 25405k, Columbus, Ohio, US; & JP-A-60 245 681(NITTO
ELECTRIC INDUSTRIAL CO., LTD) 05-12-1985
CHEMICAL ABSTRACTS, vol. 106, no. 24, 15th
June 1987, page 53, abstract no. 197533n,
Columbus, Ohio, US; & JP-A-61 261383 (NICHIBAN CO., LTD) 19-11-1986**

(73) Proprietor : **MINNESOTA MINING AND
MANUFACTURING COMPANY
3M Center, P.O. Box 33427
St. Paul, Minnesota 55133-3427 (US)**

(72) Inventor : **Sasaki, Makoto c/o Minnesota
Mining and
Manufacturing Company 2501 Hudson Road
P.O. Box 33427 St. Paul Minnesota 55133 (US)**
Inventor : **Egashira, Ken c/o Minnesota Mining
and
Manufacturing Company 2501 Hudson Road
P.O. Box 33427 St. Paul Minnesota 55133 (US)**

(74) Representative : **Baillie, Iain Cameron et al
c/o Ladas & Parry, Altheimer Eck 2
W-8000 München 2 (DE)**

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

## Description

The invention relates to an acrylic pressure-sensitive adhesive (PSA), and more particularly, to a PSA that is especially suited for adhering to resins containing a low molecular weight plasticizer.

Pressure-sensitive adhesives having improved resistance to plasticizer have previously been made by copolymerizing acrylic acid with a monomer having a high glass transition temperature ($T_g$) such as acrylic acid esters, methacrylic acid esters, acrylonitrile, vinyl acetate, etc. (U.S. Pat. No. 3,325,459, JP-A-53-26836, JP-A-58-109572). Other plasticizer-resistant PSAs have been prepared by adding NBR, a phenolic resin, xylene resin, etc. to acrylic acid copolymers (JP-B-58-18958, JP-A-58-109572). Still other plasticizer-resistant PSAs have been prepared by adding a polyvalent metal chloride curing agent to acrylic acid copolymers (JP-A-55-112283).

There are still no PSAs that have attained plasticizer resistance to a practically sufficient degree. That is, when conventional pressure-sensitive adhesives are applied to a polymer backing containing a low molecular weight plasticizer, the plasticizer gradually moves to the adhesive, softening it and decreasing its adhesive properties so that the resultant tape product is not commercially practical.

The present invention provides a practical PSA that not only can be used for general purposes, but also adheres firmly to polymer bases containing a low molecular weight plasticizer; further, there is very little change of adhesion with the lapse of time.

The present invention provides (1) a pressure-sensitive adhesive comprising an acrylic copolymer having a weight average molecular weight of more than 600,000 (preferably 600,000-900,000, and more preferably 800,000 to 900,000), of which the monomer components are from 50 to 99 weight percent* butyl acrylate, from 0 to 49 (especially 10-37) weight percent* of one or more of copolymerizable vinyl compounds (e.g., alkyl acrylates, vinyl acetate, styrene, acrylonitrile, and N-vinyl pyrrolidone), from 1 to 20 weight percent* of $\alpha$, $\beta$-ethylenically unsaturated carboxylic acid (e.g., acrylic acid, methacrylic acid, itaconic acid, crotonic acid, and maleic acid), and an effective amount of an isocyanate series crosslinking agent. In a preferred embodiment, the pressure-sensitive adhesive also includes up to 50% (preferably up to 20%), based on the weight of the acrylic copolymer of a tackifying agent, e.g., rosin, modified rosin, polyterpene resins, aliphatic hydrocarbon resins, etc.

The main monomer constituting the acrylic copolymer of the present invention is butyl acrylate, other alkyl acrylates proving unsuitable for use as the main monomer. For example, when methyl acrylate, ethyl acrylate or n-propyl acrylate is used as a main monomer, either tackiness or adhesion force lowers, the balance between the two becoming poor. When 2-ethylhexyl acrylate, octyl acrylate. or lauryl acrylate is used as a main monomer, the adhesion force, i.e., resistance to plasticizer, greatly decreases with the lapse of time.

The amount of butyl acrylate used is from 50 to 99%, and a range of from 70 to 95% is particularly preferred. When the amount is less than 50%, the adhesion force of the resultant PSA is not sufficient, particularly at low temperatures such as 10°C. When the amount exceeds 99%, the cohesive force and thermal resistance of the resulting pressure-sensitive adhesive become insufficient.

The amount of the $\alpha$, $\beta$-ethylenically unsaturated carboxylic acid used is from 1 to 20%, and a range of from 5 to 10% is particularly preferred. When the amount is less than 1%, the resulting PSA lacks sufficient cohesive force and thermal resistance, and when the amount exceeds 20%, the moisture resistance and water resistance of the PSA become poor.

The amount of the vinyl compound used is from 0 to 49 weight percent, preferably from 10 to 37 weight percent. When the amount exceeds 49 weight percent, the adhesion obtained is not sufficient, particularly at low temperatures.

The acrylic copolymer can be produced by solution polymerization when its molecular weight is relatively low, and by emulsion polymerization when its molecular weight is relatively high.

Examples of the isocyanate series crosslinking agent include "Coronate" L (produced by Nippon Polyurethane Co., Ltd.) and "Sumijule" L-75 (produced by Sumitomo Bayer Urethane Co., Ltd.), each of which is an adduct of 3 moleculares of tolyenediisocyanate with 1 molecule of trimethylolpropane, and "Desmodur" R (produced by Bayer Co., Ltd.), which is triphenylmethane triisocyanate. To impart adequate plasticizer resistance, the amount of isocyanate should be sufficient to crosslink from about 10 to about 60 mole percent (preferably 30 to 50 mole percent) of the polar groups contained in the acrylic copolymer.

Detailed Description

The present invention will be illustrated in more detail with reference to the following examples. As previ-

* All parts and percentages used herein are by weight unless otherwise noted.

ously indicated, all parts and percentages are by weight unless otherwise noted.

The weight average molecular weight of the acrylic copolymer was obtained by measuring the molecular weight distribution of the copolymer by gel permeation chromatography (GPC) of a dry rotor V type (produced by Nippon Bunko Kogyo Co., Ltd., a detector, and a concentration differential refractometer RID-300) using a 0.5 tetrahydrofuran (THF) solution of the copolymer, and calculating on a polystyrene basis.

Example 1

| Component | Parts |
|---|---|
| n-Butyl acrylate | 95 |
| Acrylic acid | 5 |
| Benzoyl peroxide | 0.02 |
| Ethyl acetate | 130 |

The compounds described above were added to a reactor and kept at a temperature of from 80 to 85°C for 20 hours with stirring under a nitrogen gas stream, 20 parts of toluene being added to finish the reaction. The acrylic copolymer solution thus obtained contained 39.7% non-volatile matter, and its viscosity was about 15,000 cps (15 Pa.s) (Gardner's method, at 25°C). The weight average molecular weight of this copolymer as measured by GPC was about 700,000. Thereafter, 0.5 part of "Coronate" L was added to 100 parts of this solution, and the mixture was well stirred to prepare an adhesive. This adhesive was coated onto a 25 μm polyester film in a dry thickness of 35 μm, the film having been previously coated with "Villon" 600 primer (produced by Toyobo Co., Ltd.) on a gravure printing machine. The adhesive was then dried at 100°C for 2 minutes to prepare an adhesive film.

This adhesive film was bonded to a 1-mm plasticized polyvinyl chloride film containing 70 parts of dioctyl phthalate to prepare a test tape. This test tape was stored under the following three conditions and measured for the respective adhesion forces according to the method of JIS Z-0237.

Initial R.T. adhesion: Allowed to stand for 24 hours at room temperature (21± 2°C, 65 ± 5% RH).

Aged Adhesion I: Stored at 80°C for 3 days and then allowed to stand at room temperature for a hour.

Aged Adhesion II: Stored at 80°C for 10 days and then allowed to stand at room temperature for one hour. The results of these tests are shown in Table 1.

Creep Test:

In this test, which was carried out on the test tape according to the method of JIS Z-0237, the test tape was bonded to a 1-mm plasticized polyvinyl chloride (PVC) film containing 70 parts of dioctyl phthalate and allowed to stand at room temperature for 24 hours. Thereafter, the resulting laminate was placed vertically in an 80°C oven with the PVC film gripped in a clamp and a load of 1 kg attached to the test tape. The amount of slippage of the test tape from the plasticized PVC film was measured after 15 minutes; if failure occurred by total separation, the time of failure was recorded.

Example 2

| Component | Parts |
|---|---|
| n-Butyl acrylate | 70 |
| Methyl acrylate | 20 |
| Methyl methacrylate | 5 |
| Acrylic acid | 5 |
| Benzoyl peroxide | 0.02 |
| Ethyl acetate | 150 |

The compounds described above were added to a reactor and kept at a temperature of 80 to 85°C for 22 hours with stirring under a nitrogen gas stream, 50 parts of toluene being added to finish the reaction. The resultant acrylic copolymer solution contained 33.2% non-volatile matter, and its viscosity was about 3,950 cps (3.95 Pa.s). The weight average molecular weight of this copolymer was about 790,000. Thereafter, 0.5 part of "Coronate" L was added to 100 parts of this solution, and the mixture was well stirred to prepare an adhesive. Adhesion and creep test measurements were performed as in Example 1. The results are shown in Table 1.

Example 3

| Component | Parts |
|---|---|
| n-Butyl acrylate | 55 |
| Vinyl acetate | 30 |
| Acrylonitrile | 8 |
| Maleic anhydride | 7 |
| Benzoyl peroxide | 0.02 |
| Ethyl acetate | 150 |

Procedure was the same as in Example 1, except that the copolymerization time was 21 hours, to prepare an acrylic copolymer solution. The non-volatile matter content and viscosity of this solution were 33.3% and about 8,700 cps (8.7 Pa.s), respectively, and the weight average molecular weight of the copolymer was about 850,000. Thereafter, in the same manner as in Example 1, an adhesive film was prepared, and adhesion and creep tests performed. The results are shown in Table 1.

Example 4

An adhesive film was prepared in the same manner as in Example 1 except that 0.5 part of "Sumijule" L-75 was used as the isocyanate series crosslinking agent, and adhesion and creep tests were performed. The results are shown in Table 1.

Example 5

Procedure was carried out in the same manner as in Example 2 except that the copolymerization time was 18 hours, and that the amount of benzoyl peroxide used was 0.03 part, to prepare an acrylic copolymer having a viscosity of about 3,020 cps (3.02 Pa.s) and a weight average molecular weight of about 600,000. Thereafter, in the same manner as in Example 2, an adhesive film was prepared, and adhesion and creep tests performed. The results are shown in Table 1.

Example 6

To 100 parts of the acrylic copolymer of Example 1 there was added 2.0 parts of a rosin ester tackifying agent (KE-311, commercially available from Arakawa Chemical Industry Co.). The results of adhesion and creep tests performed as in previous examples, are reported in Table 1.

Comparative Example C-1

Procedure was carried out as in Example 1, except that the copolymerization time was 8 hours, and the amount of benzoyl peroxide used was 0.01 part, to prepare an acrylic copolymer having a viscosity of about 3,290 cps (3.290 Pa.s) and a weight average molecular weight of about 360,000. Thereafter, in the same manner as in Example 1, an adhesive film was prepared, and adhesion and creep tests were performed. The results are shown in Table 1.

Comparative Example C-2

| Component | Parts |
|---|---|
| 2-Ethylhexyl acrylate | 70 |
| Methyl acrylate | 20 |
| Methyl methacrylate | 5 |
| Acrylic acid | 5 |
| Benzoyl peroxide | 0.02 |
| Ethyl acetate | 150 |

The components were added to a reactor and kept at a temperature of from 80 to 85°C for 20 hours with stirring under a nitrogen gas stream, 20 parts of toluene being added to finish the reaction. The acrylic copolymer solution thus obtained contained 37% non-volatile matter, and its viscosity was about 6,980 cps (6.980 Pa.s). The weight average molecular weight of this copolymer was about 700,000. Thereafter, 0.5 part of "Coronate" L was added to 100 parts of this solution, and the mixture was well stirred to prepare an adhesive. In the same manner as in Example 1, an adhesive film was prepared, and adhesion and creep tests were performed. The results are shown in Table 1.

Comparative Example C-3

Procedure was the same as in Example 2, except that the copolymerization time was 8 hours and the amount of benzoyl peroxide used was 0.1 part, to prepare an acrylic copolymer having a viscosity of about 2,850 cps (2.85 Pa.s) and a weight average molecular weight of about 330,000. Thereafter, in the same manner as in Example 2, an adhesive film was prepared, and its adhesion force was measured after storage under the prescribed conditions. Separately, the creep test was carried out. The results are shown in Table 1.

Comparative Example C-4

An adhesive film was prepared as in Example 2 except that 0.5 part of MC 591 (5% solution of bisamide series compound produced by Minnesota Mining and Manufacturing Company) was used as the crosslinking agent. Adhesion and creep tests were performed as in previous examples. The results are shown in Table 1.

Comparative Example C-5

| Component | Parts |
|---|---|
| n-Butyl acrylate | 78 |
| Acrylic acid | 22 |
| Benzoyl peroxide | 0.02 |
| Ethyl acetate | 130 |

The components were added to a reactor and kept at a temperature of from 80 to 85° C. for 22 hours with stirring under a nitrogen gas stream, and 20 parts of toluene was added to finish the reaction. The acrylic copolymer solution thus obtained contained 40% non-volatile matter, and its viscosity was about 13,260 cps (13.260 Pa.s). The weight average molecular weight of this copolymer was about 700,000. Thereafter, 0.5 part of "Coronate" L was added to 100 parts of this solution, and the mixture was well stirred to prepare an adhesive. In the same manner as in Example 1, an adhesive film was prepared, and its adhesion force was measured after storage under the prescribed conditions. Separately, the creep test was carried out. The results are shown in Table 1.

Comparative Example C-6

| Component | Parts |
|-----------|-------|
| n-Butyl acrylate | 99.5 |
| Acrylic acid | 0.5 |
| Benzoyl peroxide | 0.02 |
| Ethyl acetate | 130 |

The components were added to a reactor and kept at a temperature of from 80 to 85°C for 23 hours with stirring under a nitrogen gas stream, and 20 parts of toluene was added to finish the reaction. The resultant acrylic copolymer solution contained 39.3% non-volatile matter, and its viscosity was about 14,200 cps (14.2 Pa.s). The weight average molecular weight of this copolymer was about 700,000. Thereafter, 0.5 part of "Coronate" L was added to 100 parts of this solution, and the mixture was well stirred to prepare and adhesive. In the same manner as in Example 1, an adhesive film was prepared, and adhesion and creep tests performed. The results are shown in Table 1.

Comparative Example C-7

| Component | Parts |
|-----------|-------|
| n-Butyl acrylate | 48 |
| Methyl acrylate | 42 |
| Methyl methacrylate | 5 |
| Acrylic acid | 5 |
| Benzoyl peroxide | 0.02 |
| Ethyl acetate | 150 |

The components were added to a reactor and kept at a temperature of from 80 to 85°C for 20 hours with stirring under a nitrogen gas stream, and 20 parts of toluene was added to finish the reaction. The resultant acrylic copolymer solution contained 37.1% non-volatile matter, and its viscosity was about 8,980 cps (8.98 Pa.s) at 25°C. The weight average molecular weight of this copolymer was about 700,000. Thereafter, 0.5 part of "Coronate" L was added to 100 parts of this solution, and the mixture was well stirred to prepare an adhesive. In the same manner as in Example 2, an adhesive film was prepared, and adhesion and creep tests performed. The results are shown in Table 1.

Comparative Example C-8

An adhesive film was prepared in the same manner as in Example 2 except that 3.0 parts of "Coronate" L was used as the isocyanate series crosslinking agent. The weight average molecular weight of the acrylic copolymer obtained was about 790,000. The adhesion and creep tests were carried out as in the preceding examples. The results are shown in Table 1.

## TABLE 1

| Example | Initial Adhesion, N/dm | Aged Adhesion I, N/dm | Adhesion I / Initial Adhesion | Aged Adhesion II N/dm | Adhesion II / Initial Adhesion | Creep |
|---|---|---|---|---|---|---|
| 1 | 85.0 | 69.5 | 0.82 | 59.9 | 0.70 | 1 mm |
| 2 | 143 | 139 | 0.97 | 112 | 0.78 | 0.5 mm |
| 3 | 108 | 104 | 0.96 | 100 | 0.93 | 0.5 mm |
| 4 | 86.9 | 75.3 | 0.87 | 63.7 | 0.73 | 1 mm |
| 5 | 127 | 124 | 0.97 | 94.6 | 0.74 | 0.5 mm |
| 6 | 118 | 96.1 | 0.82 | 83.0 | 0.70 | 1.5 mm |
| C-1 | 83.0 | 3.47 | 0.04 | 13.5 | 0.16 | 30 sec |
| C-2 | 135 | 61.8 | 0.46 | 30.9 | 0.23 | 50 sec |
| C-3 | 102.3 | 42.5 | 0.42 | 30.9 | 30.9 | 55 sec |
| C-4 | 96.5 | 50.2 | 0.52 | 34.7 | 0.36 | 1 min |
| C-5 | 30.9 | 19.3 | 0.63 | 13.5 | 0.44 | 1 min |
| C-6 | 69.5 | 54.1 | 0.78 | 34.7 | 0.5 | 20 sec |
| C-7 | 34.8 | 15.4 | 0.44 | 11.6 | 0.33 | 25 sec |
| C-8 | 69.5 | 52.1 | 0.75 | 23.2 | 0.33 | 0.2 mm |

EP 0 338 724 B1

For practical purposes an adequate adhesion value is greater than 45 N/dm, preferably greater than 60 N/dm. Similarly, a practical creep value is less than 1.0 mm, preferably less than 0.5 mm. As shown in Table 1, the adhesive film prepared with the pressure-sensitive adhesive of the present invention maintains excellent adhesion even after aging as is shown by its remarkably superior (aged adhesion I):(initial adhesion) and (aged adhesion II) : (initial adhesion) ratios. Further, there is no lowering in the creep characteristics.

## Claims

1. A pressure-sensitive adhesive that adheres well to plasticized polyvinyl chloride and similar plasticized polymeric substrates, even after extensive aging, comprising an acrylic copolymer having a weight average molecular weight of more than 600,000, the monomer components of said copolymer comprising 50-99 weight % butyl acrylate, 0-49 weight % of at least one copolymerizable vinyl compound, 1-20 weight % $\alpha,\beta$-unsaturated carboxylic acid, and sufficient isocyanate crosslinking agent to crosslink 10-60% of the polar groups in the copolymer.

2. The pressure-sensitive adhesive of claim 1 wherein the molecular weight of the acrylic copolymer is 800,000-900,000.

3. The pressure-sensitive adhesive of claim 1 or 2 wherein the copolymer contains 70-95 weight percent butyl acrylate.

4. The pressure-sensitive adhesive of any preceding claim wherein the copolymer contains 10-37 weight percent copolymerizable vinyl compound.

5. The pressure-sensitive adhesive of any preceding claim wherein sufficient isocyanate is present to crosslink 30-50% of the polar groups in the copolymer.

6. The pressure-sensitive adhesive of any preceding claim wherein the adhesive contains up to 50 weight percent, based on the copolymer, of a tackifier.

7. The pressure-sensitive adhesive of claim 6 wherein the adhesive contains up to 20 weight percent of the tackifier.

8. The pressure-sensitive adhesive of claim 7 wherein the tackifier is a rosin ester.

## Patentansprüche

1. Haftkleber, der gut auf weichmacherhaltigem PVC und ähnlichen weichmacherhaltigen Polymersubstraten auch nach längerer Alterung haftet, umfassend ein Acrylcopolymer mit einer Masse gemittelten Molekülmasse von mehr als 600.000, wobei die Monomerkomponenten des Copolymers 50 bis 99 Gew.-% Butylacrylat, 0 bis 49 Gew.-% von mindestens einer copolymerisierbaren Vinylverbindung, 1 bis 20 Gew.-% $\alpha,\beta$-ungesättige Carbonsäure und ausreichendes Isocyanat als Vernetzungsmittel umfassen, um 10 bis 60 % der polaren Gruppen im Copolymer zu vernetzen.

2. Haftkleber nach Anspruch 1, bei welchem die Molekülmasse des Acrylcopolymers 800.000 ... 900.000 beträgt.

3. Haftkleber nach Anspruch 1 oder 2, bei welchem das Copolymer 70 bis 95 Gew.-% Butylacrylat aufweist.

4. Haftkleber nach einem der vorstehenden Ansprüche, bei welchem das Copolymer 10 bis 37 Gew.-% copolymerisierbare Vinylverbindung aufweist.

5. Haftkleber nach einem der vorstehenden Ansprüche, bei welchem zum Vernetzen von 30 bis 50 % der polaren Gruppen in dem Copolymer ausreichendes Isocyanat vorhanden ist.

6. Haftkleber nach einem der vorstehenden Ansprüche, bei welchem der Kleber bezogen auf das Copolymer bis zu 50 Gew.-% eines Klebrigmachers aufweist.

**7.** Haftkleber nach Anspruch 6, bei welchem der Kleber bis zu 20 Gew.-% Klebrigmacher aufweist.

**8.** Haftkleber nach Anspruch 7, bei welchem der Klebrigmacher ein Harzester ist.

## Revendications

**1.** Adhésif sensible à la pression, qui adhère bien à des substrats en chlorure de polyvinyle plastifiés et à des substrats polymériques plastifiés similaires, même après un vieillissement prolongé, comprenant un copolymère acrylique ayant un poids moléculaire moyen pondéral de plus de 600.000, les composants monomères de ce copolymère comprenant 50-99 % en poids d'acrylate de butyle, 0-49 % en poids d'au moins un composé vinylique copolymérisable, 1 à 20 % en poids d'acide carboxylique $\alpha,\beta$-insaturé, et une quantité suffisante d'un agent de réticulation de la série des isocyanates pour provoquer la réticulation de 10 à 60 % des groupes polaires du copolymère.

**2.** Adhésif sensible à la pression suivant la revendication 1, dans lequel le poids moléculaire du copolymère acrylique est de 800.000 à 900.000.

**3.** Adhésif sensible à la pression suivant la revendication 1 ou la revendication 2, dans lequel le copolymère comporte 70 à 95 % en poids d'acrylate de butyle.

**4.** Adhésif sensible à la pression suivant l'une quelconque des revendications précédentes, dans lequel le copolymère contient 10 à 37 % en poids d'un composé vinylique copolymérisable.

**5.** Adhésif sensible à la pression suivant l'une quelconque des revendications précédentes, dans lequel il y a une quantité suffisante d'isocyanate pour provoquer la réticulation de 30 à 50 % des groupes polymères du copolymère.

**6.** Adhésif sensible à la pression suivant l'une quelconque des revendications précédentes, dans lequel l'adhésif contient jusqu'à 50 % en poids, par rapport au copolymère, d'un agent collant.

**7.** Adhésif sensible à la pression suivant la revendication 6, caractérisé en ce que l'adhésif contient jusqu'à 20 % en poids de l'agent collant.

**8.** Adhésif sensible à la pression suivant la revendication 7, dans lequel l'agent collant est un ester de colophane.